# EUROPEAN PATENT SPECIFICATION

(11) **EP 3 906 340 B1**
(45) Date of publication and mention of the grant of the patent: **14.05.2025**
(21) Application number: 20700184.3
(22) Date of filing: 03.01.2020
(51) Int. Cl.: D21J 3/00, D21J 7/00

(54) **DEVICE AND METHOD FOR PRODUCING A 3D MOLDED PULP PRODUCT**
VORRICHTUNG UND VERFAHREN ZUR HERSTELLUNG EINES 3D-GEFORMTEN ZELLSTOFFPRODUKTS
DISPOSITIF ET PROCÉDÉ PERMETTANT DE PRODUIRE UN PRODUIT DE PÂTE MOULÉ EN 3D

(30) Priority: 03.01.2019 SE 1950006
(43) Date of publication of application: 10.11.2021
(73) Proprietor: Celwise AB, 602 13 Norrköping (SE)
(72) Inventor: PIERCE, David, 602 16 Norrköping (SE)
(74) Representative: AWA Sweden AB
(86) International application number: PCT/EP2020/050054
(87) International publication number: WO 2020/141205

(56) References cited:
- WO-A1-2006/057609
- WO-A1-2011/059394
- WO-A1-2016/101976
- WO-A2-2006/057610
- US-A1- 2016 168 801

## Description

### Technical field

The present document relates to a device for use in a process of molding a product from pulp slurry. The disclosure also relates to a method of molding a product from a pulp slurry.

### Background

It is known to mold products from a pulp slurry by dipping a porous mold into a pulp slurry and subsequently drying and optionally pressing the thus molded product. Examples of such products are egg cartons, shock absorbing packaging inserts and paper trays, paper cups, drink carry out trays, mushroom and berry boxes and other forms of industrial, agricultural and consumer packaging.

In respect to the molding of products from pulp it is desirable to provide a mold that is durable and can be subjected to elevated temperatures. Further, smooth surface structures, reduced energy consumption, and improved quality control of the forming process are desirable.

In regard to these aspects, WO2016101976 A1 discloses an improved tool or tool part for use in molding a product from slurry, comprising a self-supporting tool wall portion having a product face, for contacting the product, and a back face on the other side of the wall relative to the product face. The tool wall portion presents pores, which are provided by a plurality of channels extending through the tool wall portion, from the product face to the back face. Such a tool or tool part is also capable of providing an efficient pickup, transfer or evaporation of pulp used, or molding the product, while requiring less energy for vacuum generation as compared to other known tools.

However, it is desirable to further reduce the energy consumption.

WO2016101976 A1 further discloses a method of molding a product from a pulp slurry by applying the slurry layer to a porous mold and removing water from the slurry by simultaneously heating and pressing the slurry layer while drawing vacuum through a mold wall, the other side of which being in contact with the slurry layer. The molding process may be performed in two or more successive pressing steps, which is advantageous as it shortens cycle time and thus increases the throughput of the production process, as compared to a process with a single pressing step.

However, it is desirable to further increase the throughput.

### Summary

It is an object of the present disclosure, to provide an improved pulp molding device for molding a product from a pulp slurry, more specifically providing a device that reduces the energy consumption and increases the throughput of the molding process, as compared to prior art.

It further lies within the object of the present disclosure to provide an improved molding process, more specifically providing a method of molding a product from a pulp slurry with reduced energy consumption and an increased throughput of the production process.

The invention is defined by the appended independent claims. Embodiments are set forth in the appended dependent claims and in the following description and drawings.

According to a first aspect of the present disclosure, there is provided a device according to claim 1.

For the purpose of the present disclosure, the term "pulp" should be construed so as to include materials comprising fibers such as cellulose, minerals and starch, or combinations of these materials. The pulp preferably has a liquid carrier, which may comprise water.

By "product face" is meant a surface of the press tool that is adapted to be in contact with a pulp slurry layer or pulp product during forming of such a pulp product.

At least one of the pair of cooperating press tools presents the porous product face. The other press tool may have a porous product face or a non-porous product face, or a partly non-porous product face. For example, some portions may be non-porous, e.g. such portions where a specific surface structure is desired.

The press tools may be mounted to a respective tool holder.

The radiation heater is adapted to radiate heat from a front side of the porous press tool towards the product face of said porous press tool. By a front side of the porous press tool is meant the side of the tool comprising the product face, as seen when mounted to the tool holders and the product face faces the other cooperating press tool.

Thus, the radiation heater is adapted to radiate heat inwardly towards the product face.

At least one of the press tools are connected to a vacuum chamber. The vacuum chamber can be connected to a pressure regulator. The pressure regulator may have the capability of selectively generating an at least partial vacuum (i.e. air pressure lower than ambient air pressure) and/or an air pressure greater than ambient pressure.

The radiation heater and the porous press tool may be movable relative each other between a heating position and a passive position. When the radiation heater is in a passive position, the porous press tool may be in a molding position, i.e. used for pressing.

By providing a radiation heater, when in use adapted to heat the porous product face of the press tool, an efficient heating of the porous product face can be achieved.

Furthermore, the need of heating elements, such as for example electric heating elements integrated with the tool, can be eliminated. Thereby, a tool with an increased void volume can be provided.

By "void volume" is meant a volume made up of void, i.e. not of heaters, support bodies or the like.

This also means that a tool with an increased porosity can be provided. Hence, an enhanced distribution of vacuum to the product face can be achieved, which, in turn reduces the need for vacuum power.

Consequently, a more energy-efficient process of producing a 3D-molded product from a pulp slurry can be provided, as compared to prior art.

For the purpose of the present disclosure, the term "porosity" is defined as pore opening area to total product face area (including the pore openings) of a predetermined product face portion.

According to one embodiment of the first aspect of the solution, the radiation heater can be movable between a heating position and a passive position, wherein the movable radiation heater is adapted to be in the heating position when the press tools are in their open position, and adapted to be in the passive position when the press tools are in their closed position.

The movable radiation heater can, in its heating position, be configured to be inserted at a preset distance from the product face of the porous press tool.

Consequently, the device may comprise a movable radiation heater, wherein the movable radiation heater can be configured to be inserted at a preset distance from the product face of the porous press tool, i.e. moved into a heating position. The movable radiation heater can further be configured to be withdrawn from the porous press tool, i.e. moved into a passive position.

The product face of the porous press tool may be heated in-between two subsequent pressing operations of the press tools. Consequently, the movable radiation heater may be configured to be moved into the heating position in-between two subsequent pressing operations, i.e. at the open position of the press tools, whereby the product face of the porous press tool is heated to a preset temperature by the movable radiation heater radiating heat towards the product face, and then configured to be withdrawn from the porous tool.

According to another embodiment of the first aspect of the solution, the radiation heater can be external.

The device can further comprise a tool transport member, adapted to move the porous press tool to the external radiation heater for heating of the product face of the porous press tool.

Consequently, the device may comprise an external radiation heater.

By external is meant that the radiation heater is arranged externally in relation to the pair of cooperating press tools as seen when arranged in their respective tool holders. Thus, the external radiation heater may be configured to be in a heating position, externally from the pair of cooperating press tools as seen when arranged in their respective tool holders.

The external radiation heater may be stationary.

The tool transport member can be configured to move the porous press tool from a tool holder of the porous press tool to the external radiation heater. The tool transport member can further be configured to move the porous press tool from the radiation heater to the tool holder of the porous press tool. Alternatively, a second tool transport member can be configured to move the porous press tool from the radiation heater to the tool holder.

The product face of the porous press tool may be heated in-between two subsequent pressing operations of the press tools. Consequently, the tool transport member may be configured to move the porous press tool from its tool holder to the external radiation heater in-between two subsequent pressing operations, i.e. at the open position of the press tools, whereby the product face of the porous press tool is heated to a preset temperature by the external radiation heater, and then optionally also configured to move the porous press tool from the external radiation heater to the tool holder of the porous press tool.

The device according to the first aspect of the present disclosure can further comprise at least two porous press tools.

By providing at least a two porous press tools, one of the porous press tools can be heated simultaneously as another one are used for pressing. Consequently, the cycle time can be shortened and a more efficient production process with an increased throughput can be provided.

The device can further comprise a changing device, adapted to, in-between two subsequent pressing operations of the pair of press tools, change between the at least two porous press tools, such that one of the at least two porous press tool is used in a first pressing operation and another one is used in a second, subsequent pressing operation.

The changing device can further be adapted to move one porous press tool from a tool holder of the porous press tool to the external radiation heater, and move another heated porous press tool from the external radiation heater to the tool holder.

The changing device may be adapted to move one porous press tool from the external radiation heater simultaneously as another porous press tool is moved to the external radiation heater. Consequently, an efficient change of the two porous press tools can be achieved, resulting in a shortened cycle time and more efficient production process.

The pair of cooperating press tools can comprise one press tool presenting a porous product face and one press tool presenting a less porous product face, preferably a non-porous product face.

By less porous product face is meant less porous as compared with the porosity of the other press tool of the cooperating press tools presenting a porous product face.

Consequently, the less porous press tool, i.e. the press tool presenting a less porous product face, can have a porous product face which is less porous than the porous press tool, i.e. the press tool presenting a porous product face. Alternatively, it can have a non-porous product face, or a partly non-porous product face.

The less porous press tool can be provided with at least one heating element, adapted to supply heat to a product face of the less porous press tool. The heating element may be an electric heating element, hot air or liquid heating element, or induction heating element. The heating element may be controlled by a controller.

Alternatively, the less porous press tool can be provided with a rear radiation heater at a rear side of the tool.

The device can further comprise a second pair of cooperating press tools, each having a respective product face, the press tools being movable relative each other between a closed press position, wherein the product faces are sufficiently close to press the pulp product there between, and an open transfer position, wherein the pulp product can be removed from the product face of one of the press tools, wherein at least one of the product faces of the second pair of cooperating press tools is porous, and wherein the device further comprises a second radiation heater which is adapted to radiate heat towards the product face of the porous press tool of the second pair of press tools, when the porous press tool is in its open position.

The second radiation heater may be adapted to radiate heat, from a front side of the porous press tool of the second pair of press tools, towards the product face of the porous press tool of the second pair of press tools, when the porous press tool is in its open position.

Thus, the second radiation heater can be adapted to radiate heat inwardly towards the product face of the porous press tool of the second pair of press tools.

The device can further comprise a third pair of cooperating press tools, each having a respective product face, the press tools being movable relative each other between a closed press position, wherein the product faces are sufficiently close to press the pulp product there between, and an open transfer position, wherein the pulp product can be removed from the product face of one of the press tools, wherein at least one of the product faces of the third pair of cooperating press tools is porous, and wherein the device further comprises a third radiation heater which is adapted to radiate heat towards the product face of the porous press tool of the third pair of press tools, when the porous press tool is in its open position.

The third radiation heater may be adapted to radiate heat, from a front side of the porous press tool of the third pair of press tools, towards the product face of the porous press tool of the third pair of press tools, when the porous press tool is in its open position.

Thus, the third radiation heater can be adapted to radiate heat inwardly towards the product face of the porous press tool of the third pair of press tools.

The first, second and/or third radiation heater may be the same or different radiation heaters.

The second and/or third pair of cooperating press tools may be designed essentially the same as the first pair of cooperating press tools.

According to a second aspect of the present disclosure, a method according to claim 9 is provided.

The first and/or second pair of cooperating press tools may form part of a device for producing a 3D molded product from a pulp slurry according to what has been described above.

Each pair of press tools may comprise a press tool presenting a porous product face and a press tool presenting a less porous product face, preferably a non-porous product face.

Consequently, the pulp slurry layer can be applied to a product face of a first pair of press tools, which may be a porous product face, a less porous product face, or a non-porous product face.

Further, the pulp slurry layer can be transferred to a product face of a second pair of press tools, which may be a porous product face, or a less porous product face, or a non-porous product face.

The heating of the pulp slurry layer during each forming step is achieved through heating of the product face of at least one of the press tools of each pair of press tools. Preferably, all product faces contacting the pulp slurry layer are heated.

The product faces of the porous press tools of the first and second pair of press tools can be heated by the same radiation heater or different radiation heaters.

The product face of at least one of the porous press tools may be heated by radiating heat from a radiation heater from a front side of the porous press tool towards the product face of the porous press tool.

The step of heating the product face of each porous press tool can comprise inserting the radiation heater at a preset distance from the product face of the porous press tool, heating the product face by radiating heat from the radiation heater towards the product face, and withdrawing the radiation heater.

Alternatively, the step of heating the product face of each porous press tool can comprise moving the porous press tool from a tool holder of the porous press tool to the radiation heater, heating the product face by radiating heat from the radiation heater towards the product face, and moving the porous press tool from the radiation heater to the tool holder.

The method can further comprise providing at least two porous press tools for each pair of cooperating press tools.

In-between two subsequent pressing operations of each pair of press tools, a change can be performed between the at least two porous press tools, such that one of the at least two porous press tools is used in a first pressing operation and another one is used in a second, subsequent pressing operation.

One of the at least two porous press tools for each pair of cooperating press tools can be heated simultaneously as another one is used for pressing in the corresponding forming step.

Each pair of cooperating press tools can comprise one press tool presenting a porous product face and one press tool presenting a less porous product face, preferably a non-porous product face.

The product face of the less porous press tool can be heated to a higher temperature than the porous press tool.

The product face of the porous press tool can be heated to a temperature corresponding to 20-80 % of the temperature of the less porous press tool, preferably 25-50 %.

An initial pressing temperature of the product face of the porous press tool of the first pair of press tools can be about 100-300 °C, preferably 150-250 °C, and more preferably 160-240 °C.

In the first forming step, the product face of the less porous press tool can be heated to about 200-500 °C, preferably 250-400 °C.

In the first forming step, a first pressure at a rear side of the product face of the porous tool, can be 200-900 mbarA (millibar absolute), preferably 300-800 mbarA.

In the first forming step, the pulp slurry layer can be pressed against one of the product faces of the press tools with a pressure of about 390-1570 kPa, preferably 580-1170 kPa.

In the first forming step, the pulp slurry layer can be pressed against one of the product faces of the press tools during a first pressing time of 0.1-4.0 second, preferably 0.5-2.0 second.

In the first forming step, an initial water content of the pulp slurry layer can be 70-90 % by weight and a final water content can be 45-65 % by weight, preferably about 50-60 % by weight.

An initial pressing temperature of the product face of the porous press tool of the second pair of press tools can be about 100-300 °C, preferably 150-250 °C, and more preferably 160-240 °C.

In the second forming step, the product face of the less porous press tool can be heated to about 200-500 °C, preferably 250-400 °C.

In the second forming step, a second pressure at a rear side of the product face of the porous tool can be 200-900 mbarA, preferably 300-800 m barA.

In the second forming step, the pulp slurry layer can be pressed against one of the product faces of the press tools with a pressure of about 390-1570 kPa, preferably 580-1170 kPa.

In the second forming step, the pulp slurry layer can be pressed against one of the product faces of the press tools during a second pressing time of 0.1-4.0 second, preferably 0.5-2.0 second.

In the second forming step, an initial water content of the pulp slurry layer can be about 45-65 %, preferably about 50-60 % by weight, and a final water content can be about 25-40 % by weight, preferably about 30-35 % by weight.

The method can further comprise: providing a third pair of cooperating press tools, each press tool having a respective product face, wherein at least one of the product faces is porous; transferring the pulp slurry layer to a product face of the third pair of press tools; and in a third, subsequent, forming step, pressing the pulp slurry layer between the third pair of press tools, while heating the pulp slurry layer and drawing a vacuum through the product face of the porous press tool.

The product face of the porous press tool of the third pair of press tools can be heated by radiating heat from a radiation heater towards the product face of said porous press tool.

The product face of the porous press tool of the third pair of press tools may be heated by radiating heat from a radiation heater, from a front side of the porous press tool of the third pair of press tools, towards the product face of the porous press tool.

The third pair of cooperating press tools may be designed essentially the same as the first and/or second pair of coopearting press tools.

The product face of the porous press tool of the third pair of cooperating press tools may be heated by the same radiation heater as the porous press tools of the first and second pair of cooperating press tools, or by a different radiation heater.

An initial pressing temperature of the product face of the porous press tool of the third pair of press tools can be about 100-300 °C, preferably 150-250 °C, and more preferably 160-240 °C.

In the third forming step, a less porous product face of the third pair of press tools, can be heated to about 200-500 °C, preferably 250-400 °C.

In the third forming step, a third pressure at a rear side of the product face of the porous press tool can be 200-900 mbarA, preferably 300-800 mbarA.

In the third forming step, the pulp slurry layer can be pressed against one of the product faces of the press tools with a pressure of about 390-1570 kPa, preferably 580-1170 kPa.

In the third forming step, the pulp slurry layer can be pressed against one of the product faces of the press tools during a third pressing time of 0.1-4.0 second, preferably 0.5-2.0 second.

In the third forming step, an initial water content of the pulp slurry layer can be about 25-45 % or 25-40 % by weight, preferably about 30-40 % or 30-35 % by weight, and a final water content can be less than about 5 % by weight, preferably less than about 1 % by weight.

### Brief Description of the Drawings

Embodiments of the present solution will now be described, by way of example, with reference to the accompanying schematic drawings in which:
Figs 1a-1b schematically illustrate one embodiment of a molding device comprising a movable radiation heater.
Fig. 1c-1d schematically illustrate one embodiment of a molding device comprising an external radiation heater.
Fig. 2a-c schematically illustrate one embodiment of a molding device comprising at least two porous press tools.
Fig. 3 schematically illustrate one embodiment of a molding device.
Fig. 4 schematically illustrates a production process.

### Description of Embodiments

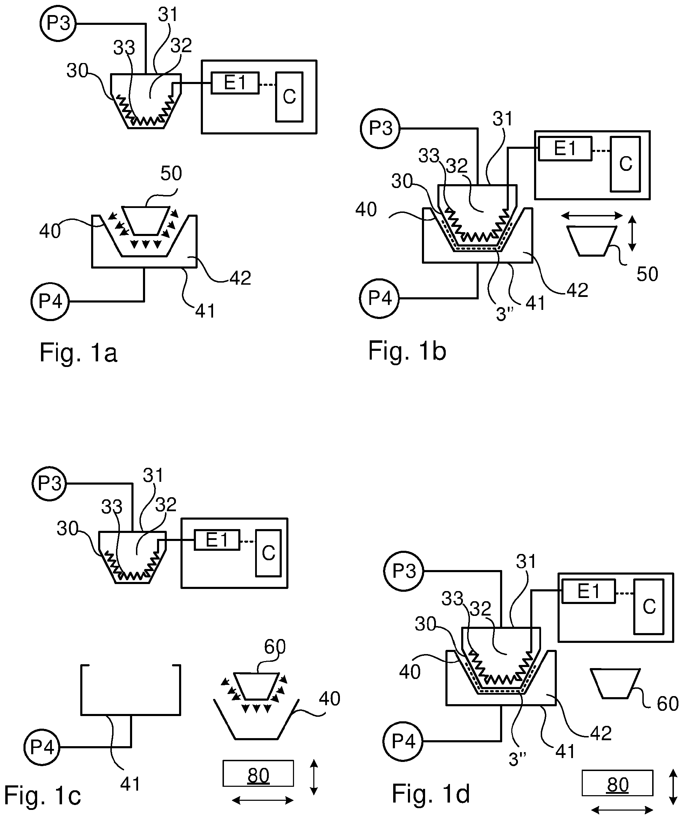

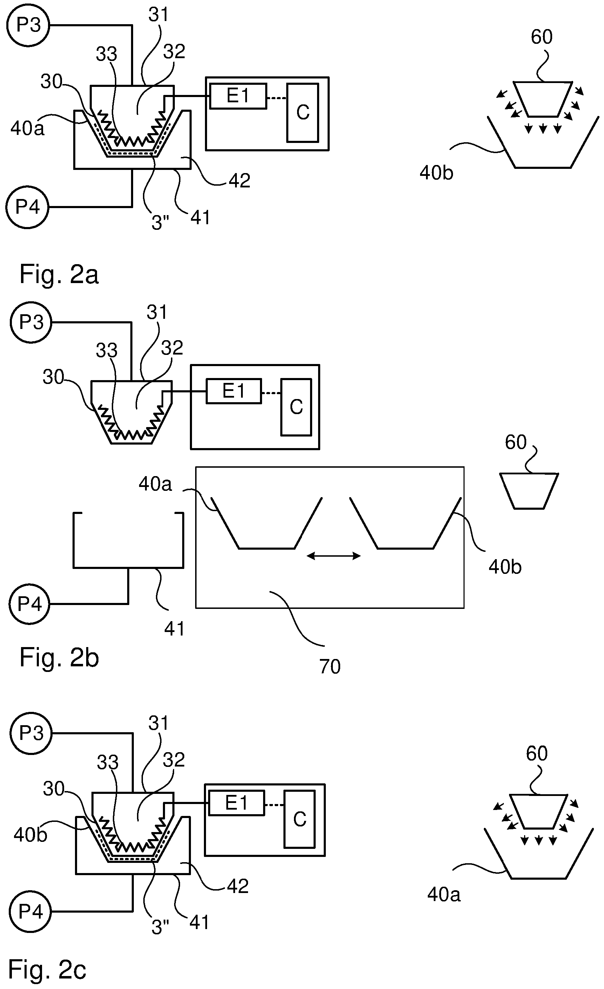

Fig. 1a-1b, Fig. 1c-1d and Fig. 2a-2c schematically illustrate a device for producing a 3D molded product from a pulp slurry. The device comprises a pair of cooperating press tools 30, 40.

One, or both, of the pressing tools may be mounted on a respective tool holder 31, 41. One, or both, of the pressing tools may be connected to a respective vacuum chamber 32, 42. The vacuum chambers may be connected to a respective pressure regulator P3, P4.

The pressure regulator may have the capability of selectively generating an at least partial vacuum (i.e. air pressure lower than ambient air pressure) and/or an air pressure greater than ambient pressure.

Each of the press tools 30, 40 has a respective product face. At least one of the product faces is porous. Consequently, the pair of cooperating press tools 30, 40 comprises at least one porous press tool.

The other press tool of the cooperating press tools may have a porous product face or a non-porous product face, or a partly non-porous product face. For example, some portions may be non-porous, e.g. such portions where a specific surface structure is desired.

The at least one porous press tool can be self-supporting, meaning that a tool wall portion of the tool is sufficiently rigid and has a melting point that is sufficiently high for the tool wall portion not to require any support structure for maintaining its shape during operation.

In the illustrated example, press tool 40 is a porous press tool.

In the illustrated example, press tool 30 is a less porous press tool, as compared with the porous press tool 40.

The press tools 30, 40 and their associated tool holders 31, 41 is movable relative each other between a closed press position and an open transfer position. In the closed position the product faces of the respective tool 30, 40 are sufficiently close to press a pulp product 3' 3" there between. In the open position, a pulp slurry layer or pulp product 3', 3" may be inserted or removed from the product face of one of the press tools.

One of the press tools 30, 40, preferably the less porous press tool, may be provided with a heating element, energized by an energy supply E1 and optionally controlled by a controller C.

Alternatively, a rear radiation heater (not illustrated) may be provided at a rear side of one of the press tools 30, 40, preferably the less porous press tool. The rear radiation heater is adapted to heat radiate heat from the rear side of the press tool towards the product face of the press tool. Consequently, heat is being conducted from the rear side of the press tool, through a body of said tool, and to the product face of said tool.

In the illustrated example of Fig. 1a-1d and Fig. 2a-2c, the less porous press tool 30 is provided with a heating element 33, adapted to supply heat to the product face of the tool 30, when in the closed press position of the press tools. The heating may be achieved by electric heating elements, hot air or liquid or induction, or any combination thereof.

The device according to the present invention further comprises a radiation heater 50, 60. The radiation heater 50,60 is adapted to radiate heat towards the product face of the at least one porous press tool of the cooperating press tools.

In the illustrated example of Fig. 1a-1d and Fig. 2a-2c, the radiation heater 50, 60 is adapted to heat radiate heat from a front side of the porous press tool 40 towards the product face of the porous press tool 40, when the porous press tool 40 is in its open position.

The radiation heater and the porous press tool may be movable relative each other between a heating position and a passive position. When the radiation heater is in a passive position, the porous press tool may be in a molding position, i.e. used for pressing.

The radiation heater can be a movable radiation heater 50, see Fig. 1a-1b. Alternatively, the radiation heater can be an external radiation heater 60, see Fig. 1c-1d.

Fig. 1a-1b schematically illustrates one possible embodiment of the device for producing a 3D molded product from a pulp slurry, wherein the radiation heater is a movable radiation heater 50. The radiation heater 50 is movable between a heating position (see Fig. 1a) and a passive position (see Fig. 1b).

The movable radiation heater 50 may be adapted to be in the heating position when the press tools 30, 40 are in their open position, and adapted to be in the passive position when the press tools 30, 40 are in their closed position.

The movable radiation heater can, in its heating position, be inserted at a front side of the porous press tool 40, at a preset distance from the product face of the porous press tool 40, see Fig. 1a.

The product face of the porous press tool 40 may be heated in-between two subsequent pressing operations of the press tools 30, 40. Consequently, the movable radiation heater 50 may be configured to be moved into the heating position in-between two subsequent pressing operations, i.e. at the open position of the press tools 30,40, whereby the product face of the porous press tool 40 is heated to a preset temperature by the movable radiation heater radiating heat towards the product face. After the heating, the movable radiation heater 50 may also be configured to be withdrawn from the porous tool 40.

Fig. 1c-1d schematically illustrates an alternative embodiment of the device for producing a 3D molded product from a pulp slurry, wherein the radiation heater is an external radiation heater 60.

The device can further comprise a tool transport member 80. The tool transport member 80 can be adapted to move the porous press tool 40 to the external radiation heater 60 for heating of the product face of the porous press tool 40.

Consequently, the tool transport member can be configured to move the porous press tool 40 from the tool holder 41 of the porous press tool to the external radiation heater 60. The tool transport member can further be configured to move the porous press tool 40 from the external radiation heater 60 to the tool holder 41 of the porous press tool. Alternatively, a second tool transport member (not illustrated) can be configured to move the porous press tool 40 from the external radiation heater 60 to the tool holder 41.

Fig. 1c illustrates the press tools 30, 40 in their open position, wherein the porous press tool 40 has been moved to the radiation heater for heating of the product face of the press tool.

Fig. 1d illustrates the press tools 30, 40 in their closed position.

The product face of the porous press tool 40 may be heated in-between two subsequent pressing operations of the press tools 30, 40. Consequently, the tool transport member 80 may be configured to move the porous press tool 40 from its tool holder 41 to the external radiation heater 60 in-between two subsequent pressing operations, i.e. at the open position of the press tools 30, 40, whereby the product face of the porous press tool 40 is heated to a preset temperature by the external radiation heater 60, see Fig. 1c. The tool transport member 80 can also be configured to move the porous press tool 40 from the external radiation heater 60 to the tool holder 41 of the porous press tool.

The device according to the invention may comprise at least two porous press tools 40a, 40b, which is illustrated in Fig. 2a-2c.

The device may further comprise a changing device 70, see Fig. 2b.

The changing device 70 can be adapted to, in-between two subsequent pressing operations of the pair of press tools 30, 40, change between the at least two porous press tools 40a, 40b. In that way, one of the at least two porous press tool 40a can be used in a first pressing operation and another one 40b can be used in a second, subsequent pressing operation, see Fig. 2a-2c.

The changing device 70 can further be adapted to move one porous press tool from a tool holder 41 of the porous press tool to the external radiation heater 60, and move another heated porous press tool from the external radiation heater 60 to the tool holder 41.

Consequently, according to one possible embodiment, the changing device 70 can both act as a tool transport member and change which of the at least two porous press tool 40a, 40b is used for pressing.

The changing device 70 can move one porous press tool from the external radiation heater 60 simultaneously as another porous press tool is moved to the external radiation heater 60.

It is noted that the device according to the invention, can comprise a plurality of pair of cooperating press tools which can be used in subsequent pressing steps. The plurality of pair of cooperating press tools can be designed essentially as the first pair of cooperating press tools as described above.

The device can also comprise a plurality of radiation heaters.

The product faces of the at least one porous press tool of each pair of press tool may be heated by the same radiation heater, or by different radiation heaters.

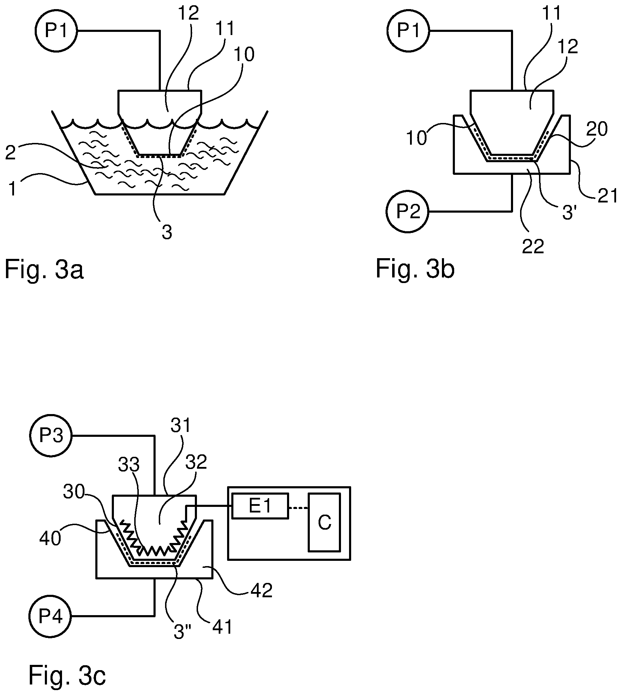

The device can further comprise a pick-up tool and one or several transfer tools which will be described in more detail in relation to Fig. 3a and 3b.

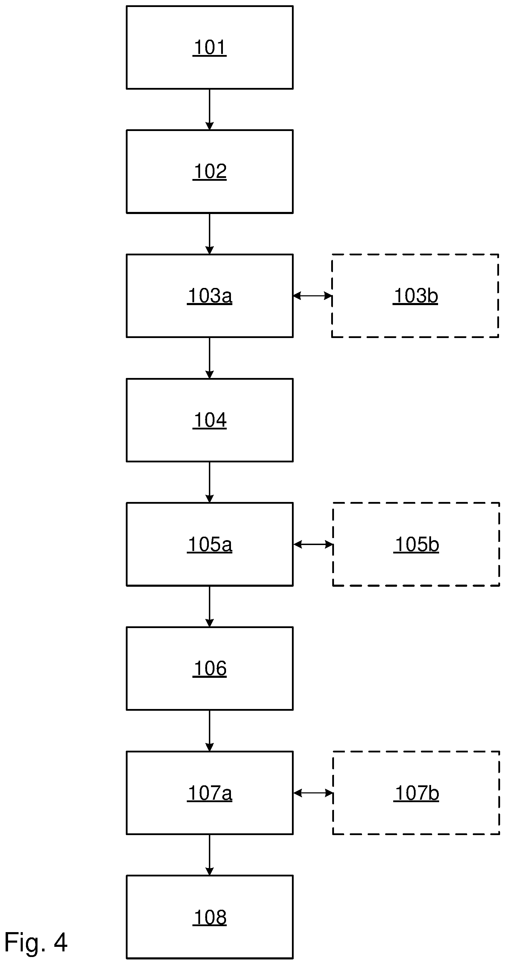

In relation to Fig. 3a-3c and Fig. 4, a method for producing a 3D molded pulp product will now be described.

Fig. 3a schematically illustrates a pickup tool 10 which is partially immersed in a container 1 holding a pulp slurry 2. The pickup tool is mounted to a tool holder 11, which together with the pickup tool defines a vacuum chamber 12 that is connected to a pressure regulator P1. The pressure regulator may have the capability of selectively generating an at least partial vacuum (i.e. air pressure lower than ambient air pressure) and/or an air pressure greater than ambient air pressure.

While the pickup tool is immersed in the pulp slurry 2, the pressure regulator P1 may generate a vacuum, causing pulp fibers 3 to stick to a product face of the pickup tool 10.

Fig. 3b schematically illustrates the pickup tool 10 transferring the pulp fibers 3 to a transfer tool 20. The transfer tool may be connected to a second pressure regulator P2, which is capable of generating a vacuum or an air pressure. The transfer tool may also be mounted on a transfer tool holder 21 so as to define a vacuum chamber 22, which is connected to the second pressure regulator.

During the transfer of the pulp fibers 3 from the pickup tool to the transfer tool, an air pressure greater than ambient pressure may be generated by the first pressure regulator P1 to cause the pulp fibers to release from the pickup tool.

Alternatively, or as a supplement, a vacuum may be generated by the second pressure regulator P2, causing the pulp fibers to be received by the transfer tool 20.

Fig. 3c schematically illustrates a pressing arrangement in a closed pressing position, wherein the pressing arrangement comprises a pair of cooperating press tools, in similar with the pair of press tools described in relation to Fig.1 a-1d and Fig. 2a-2c. The cooperating press tools 30, 40 each presents a product face. At least one of the product faces is porous.

When in the pressing position, the pulp product 3" may be heated by at least one of the product faces of the press tools 30, 40. Preferably, all product faces contacting the pulp slurry layer are heated.

The product face of the press tool 30 can be heated by suppling heat from the heating element 33. Alternatively, it may be heated by a rear radiation heater radiating heat at a rear side of the tool.

The product face of the porous press tool 40 can be heated by a radiation heater as described above in relation to Fig. 1a-1b, Fig. 1c-1d or Fig. 2a-2c. The heating of the product face of the porous press tool 40 may be performed before the pressing step, when the porous press tool 40 is in its open position.

Alternatively, at least two porous press tools 40a, 40b can be provided and the heating of one of the porous press tools can be performed simultaneously as another already heated porous press tool is used for pressing.

During the pressing step, one or both pressure regulators P3, P4 may provide a vacuum to assist in the evacuation of water vapor from the product 3".

As an alternative, one of the pressure regulators may provide a vacuum while the other one provides a pressure greater than the ambient air pressure.

Optionally, hot air or steam may be introduced through the molds during the pressing process (Fig. 3c).

It is noted that two or more successive pressing steps may be used, e.g. to gradually form all or parts of the product 3" and/or to apply additional features to the product, such as coatings, décors and the like.

In one embodiment, steps are performed in accordance with what has been described with respect to Figs 3a, 3b and 3c.

Referring to Fig. 4, a production process will now be described.

In a first step 101, a pulp slurry layer is provided, e.g. as described with reference to Fig. 3a, wherein a porous pickup tool may be submerged in a pulp slurry with vacuum being applied to a rear side of the pickup tool.

Alternatively, the pulp slurry may be applied to the pickup tool by a coating operation, such as spray coating or pouring.

The porous wall portion of the pickup tool may have a surface porosity of 10-90 %. A plurality of channel openings, or slots, or holes of the porous product face may be of the sizes 0.1-0.7 mm in diameter, preferably 0.25-0.6 mm.

In a second step 102, the pulp slurry layer is transferred from the pickup tool to a product face of a first pair of cooperating press tools. The transfer may be performed by the pickup tool, or by means of a separate transfer tool, which may have a transfer tool wall portion that is porous. During the transfer step, a vacuum may be applied to the rear side of the transferring tool wall, such that the pulp slurry layer is held to the transferring tool wall. In order to release the pulp slurry layer from the transferring tool wall, it is possible to instead apply pressurized air to the rear side of the transferring tool wall.

Alternatively, the pulp slurry layer may be applied directly to the product face of one of the first pair of press tools. That is, the pulp slurry layer may be formed directly on one of the first pair of press tools by application of the pulp slurry to a porous product face of one of the first pair of press tools. The pulp slurry layer may be applied directly to said press tool by submerging the tool presenting a porous wall portion in a pulp slurry with vacuum being applied to a rear side of the porous wall portion. Alternatively, the pulp slurry may be applied to the porous product face of said press tool by a coating operation, such as spray coating.

In a third step 103, the pulp slurry layer may be pressed between the first pair of press tools. At least one of the press tools may have a porous wall portion, which contacts the pulp slurry layer, and through which a vacuum can be drawn.

The first pair of cooperating press tools may comprise one press tool presenting a porous product face and one press tool presenting a less porous product face.

In this first pressing step 103a, a pressure lower than the surrounding ambient pressure is applied at a rear side of the porous wall portion, thus resulting in a vacuum at the rear side of the porous wall portion, causing solvent vapor, such as steam, to be drawn through the tool.

The porous wall portion of the porous press tool of the first pair of press tools may have a surface porosity of 10-90 % with hole sizes 0.1-0.7 mm, preferably 0.25-0.6 mm.

The pressure applied to the rear side of the porous wall portion may be on the order of low or medium level vacuum. That is, a first pressure may be 200-900 mbarA (millibar absolute), preferably 300-800 mbarA.

In the first pressing step 103a, typically, all product faces contacting the pulp slurry layer are heated.

The product face of the porous press tool of the first pair of press tools can be preheated by a radiation heater, as described in relation to Fig. 1a-1b, Fig. 1c-d, or Fig. 2a-2c, such that an initial pressing temperature of the product face of the porous press tool is about 100-300 °C, preferably 150-250 °C, and more preferably 160-240 °C.

After the pressing, the temperature of the product face of porous press tool can be 25-75 % of the initial pressing temperature.

Consequently, the step of heating the product face of the porous press tool can comprise inserting the radiation heater at a front side of the product face of the porous press tool, at a preset distance from the product face of the porous press tool and heating the product face to a preset temperature, by radiating heat from the radiation heater towards the product face. The heating step can further comprise withdrawing the radiation heater from the porous press tool.

Alternatively, the step of heating the product face of the porous press tool can comprise moving the porous press tool from a tool holder of the porous press tool to the radiation heater and heating the product face to a preset temperature, by radiating heat from the radiation heater towards the product face. The heating step can further comprise moving the porous press tool from the radiation heater back to the tool holder.

The heating of the product face of the porous press tool by a radiation heater may be performed before step 103a, i.e. before or during step 101 and 102, or alternatively as an additional step between 102 and 103a.

As an alternative, at least two porous press tools can be provided for the first pair of cooperating press tools.

Consequently, at least one of the at least two porous press tools can be heated simultaneously 103b as another one is used for pressing in the corresponding pressing step 103a.

Then, in-between two subsequent pressing operations of the first pair of press tools, a change can be performed between the at least two porous press tools, such that one of the at least two porous press tool can be used in a first pressing operation and another one can be used in a second, subsequent pressing operation of the first pair of press tools.

Further, in the first pressing step 103a, the product face of the less porous press tool may be heated to about 200-500 °C, preferably 300-400 °C.

The product face of the less porous press tool may be heated to a higher temperature than the porous press tool.

The porous press tool may be heated to a temperature corresponding to 20-80 % of the temperature of the less porous press tool, preferably 25-50 %.

A pressing pressure between the first pair press tools may be on the order of about 390-1570 kPa, and in most cases 580-1170 kPa.

The pressing pressure may be applied during a first pressing time of 0.1-4.0 second, preferably 0.5-2.0 second. In most settings, a pressing time on the order of 0.5-1.5 second is sufficient, and often also 0.5-1 second.

Typically, in this first step, an initial water content of the pulp slurry layer is 70-90 % by weight and after the pressing step has been performed, a final water content may be 45-65 % by weight, typically about 50-60 % by weight.

After the first pressing step 103a, the pulp slurry layer, now with a substantial amount of its solvent removed, may be transferred 104 to a product face of a second pair of cooperating press tools. The transfer 104 may be performed in the same manner as the first transfer step 102, and with similar equipment. The second pair of press tools may be designed essentially as the first pair of cooperating press tools.

In a second pressing step 105a, the pulp slurry layer may be pressed between the second pair of press tools. At least one of the press tools may have a porous wall portion, which contacts the pulp slurry layer, and through which a vacuum can be drawn.

The pair of cooperating press tools may comprise one press tool presenting a porous product face and one press tool presenting a less porous product face.

In this second pressing step 105a, a pressure lower than the surrounding ambient pressure is applied at a rear side of the porous wall portion, thus resulting in a vacuum at the rear side of the porous wall portion, causing solvent vapor, such as steam, to be drawn through the tool.

The porous wall portion of the porous press tool of the second pair of press tools may have a surface porosity of 25-50 % with hole sizes 0.1-1.2 mm, preferably 0.25-1.0 mm.

However, in the second pressing step 105a, the pressure applied at the rear side of the porous wall portion may be higher than that provided in the first pressing step 103a.

In particular, the pressure provided in the first pressing step 103a may be 1-99 % of that provided in the second pressing step 105a, preferably 50-99 %, 90-99 %, 95-99 % or 99-99.9 %.

In the second pressing step, the absolute pressure applied to the rear side of the product face of the porous tool may be 200-900 mbarA, preferably 300-800 mbarA, but always greater than in the first pressing step.

In the second pressing step, typically, all product faces contacting the pulp slurry layer may be heated.

The product face of the porous press tool of the second pair of press tools can be preheated by a radiation heater, as described in relation to Fig. 1a-1b, Fig. 1c-d, or Fig. 2a-2c, such that an initial pressing temperature of the product face of the porous press tool is about 100-300 °C, preferably 150-250 °C, and more preferably 160-240 °C.

After the pressing, the temperature of the product face of porous press tool can be 25-75 % of the initial pressing temperature.

Consequently, the step of heating the product face of the porous press tool can comprise inserting the radiation heater at a front side of the product face of the porous press tool, at a preset distance from the product face of the porous press tool and heating the product face to a preset temperature, by radiating heat from the radiation heater towards the product face. The heating step can further comprise withdrawing the radiation heater from the porous press tool.

Alternatively, the step of heating the product face of the porous press tool can comprise moving the porous press tool from a tool holder of the porous press tool to the radiation heater and heating the product face to a preset temperature, by radiating heat from the radiation heater towards the product face. The heating step can further comprise moving the porous press tool from the radiation heater to the tool holder.

The heating of the porous press tool of the second pair of press tools may be performed after step 103a and before step 105a.

As an alternative, at least two porous press tools can be provided for the second pair of cooperating press tools.

Consequently, at least one of the at least two porous press tools can be heated simultaneously 105b as another one is used for pressing in the corresponding pressing step 105a.

Then, in-between two subsequent pressing operations of the second pair of press tools, a change can be performed between the at least two porous press tools, such that one of the at least two porous press tool can be used in a first pressing operation and another one can be used in a second, subsequent pressing operation of the second pair of press tools.

Further, in the second pressing step 105a, the product face of the less porous press tool may be heated to about 200-500 °C, preferably 300-400 °C.

The product face of the less porous press tool may be heated to a higher temperature than the porous press tool.

The porous press tool may be heated to a temperature corresponding to 20-80 % of the temperature of the less porous press tool, preferably 25-50 %.

In the second pressing step 105a, a pressing pressure between the product faces of the second pair of press tools may be on the order of about 390-1570 kPa, and in most cases 580-1170 kPa.

The pressing pressure may be applied during a second pressing time of 0.1-4.0 second, preferably 0.5-2.0 second. In most settings, a pressing time on the order of 0.5-1.5 second is sufficient, and often also 0.5-1 second.

Typically, in this second pressing step, an initial water content of the pulp slurry layer may be about 45-65 %, typically about 50-60 % by weight.

A final water content may be about 25-40 % by weight, preferably about 30-35 % by weight.

After the second pressing step 105a, the pulp slurry layer, now with a substantial amount of its solvent removed, may be transferred 106 to a third pair of cooperating press tools. The transfer 106 may be performed in the same manner as the first transfer step 102 and/or the second transfer step 104, and with similar equipment. The third pair of press tools may be designed essentially as the first and/or second pair of press tools.

In a third pressing step 107a, the pulp slurry layer may be pressed between the third pair of press tools. At least one of the press tools may have a porous wall portion, which contacts the pulp slurry layer, and through which a vacuum can be drawn.

The third pair of cooperating press tools may comprise one press tool presenting a porous product face and one press tool presenting a less porous product face.

In this third pressing step 107a, a pressure lower than the surrounding ambient pressure is applied at a rear side of the porous wall portion, thus resulting in a vacuum at the rear side of the porous wall portion, causing solvent vapor, such as steam, to be drawn through the tool.

The porous wall portion of the porous tool of the third pair of press tools may have a surface porosity of 25-50 % with hole sizes 0.1-1.2 mm, preferably 0.25-1.0 mm.

However, in the third pressing step 107a, the pressure applied at the rear side of the porous wall portion may be higher than that provided in the second pressing step 105a.

In particular, the pressure provided in the second pressing step 105a may be 1-99 % of that provided in the third pressing step 107a, preferably 50-99 %, 90-99 %, 95-99 % or 99-99.9 %.

In the third pressing step, an absolute pressure provided at the rear of the porous wall portion of the porous press tool of the third pair of press tools may be 200-900 mbarA, preferably 300-800 mbarA, but always greater than in the second pressing step.

In the third pressing step, typically, all product faces contacting the pulp slurry layer are heated.

The product face of the porous press tool of the third pair of press tools can be preheated by a radiation heater, as described in relation to Fig. 1a-1b, Fig. 1c-d, or Fig. 2a-2c, such that an initial pressing temperature of the product face of the porous press tool is about 100-300 °C, preferably 150-250 °C, and more preferably 160-240 °C.

After the pressing, the temperature of the product face of porous press tool can be 25-75 % of the initial pressing temperature.

Consequently, the step of heating the product face of the porous press tool can comprise inserting the radiation heater at a front side of the product face of the porous press tool, a preset distance from the product face of the porous press tool and heating the product face to a preset temperature, by radiating heat from the radiation heater towards the product face. The heating step can further comprise withdrawing the radiation heater from the porous press tool.

Alternatively, the step of heating the product face of the porous press tool can comprise moving the porous press tool from a tool holder of the porous press tool to the radiation heater and heating the product face to a preset temperature, by radiating heat from the radiation heater towards the product face. The heating step can further comprise moving the porous press tool from the radiation heater to the tool holder.

The heating of the porous press tool by a radiation heater may be performed after step 105a and before step 107a.

As an alternative, at least two porous press tools can be provided for the third pair of cooperating press tools.

Consequently, at least one of the at least two porous press tools can be heated simultaneously 107b as another one is used for pressing in the corresponding pressing step 107a.

Then, in-between two subsequent pressing operations of the third pair of press tools, a change can be performed between the at least two porous press tools, such that one of the at least two porous press tool can be used in a first pressing operation and another one can be used in a second, subsequent pressing operation of the third pair of press tools.

Further, in the third pressing step 107a, the product face of the less porous press tool may be heated to about 200-500 °C, preferably 300-400 °C.

The product face of the less porous press tool may be heated to a higher temperature than the porous press tool.

The porous press tool may be heated to a temperature corresponding to 20-80 % of the temperature of the less porous press tool, preferably 25-50 %.

A pressing pressure between product faces of the third pair of press tools may be on the order of about 390-1570 kPa, and in most cases 580-1170 kPa.

The pressing pressure may be applied during a third pressing time of 0.1-4.0 second, preferably 0.5-2.0 second. In most settings, a pressing time on the order of 0.5-1.5 second is sufficient, and often also 0.5-1 second.

Typically, in this third pressing step, an initial water content of the pulp slurry layer may be about 25-45 % or 25-40 % by weight, preferably about 30-40 % or 30-35 % by weight, and a final water content may be less than about 5 % by weight, preferably less than about 1 % by weight.

After the third pressing step 107a, the pulp slurry layer, now with most of its solvent removed, may be transferred 108 out of the machine.

Optionally, additional steps, such as surface treatment, cutting or printing may be performed on the thus essentially dry product. The product may then be packaged, stored and shipped.

It is noted that the third pressing step 107a, and thus also its related transfer step 106, is optional. Hence, the process may be finished after the second pressing step 105a with the output step 108 following immediately.

Thus, in the first pressing step, an initial water content of the pulp slurry layer may be 70-90 % by weight and a final water content may be 25-50% by weight, preferably about 30-35 % by weight.

In the second pressing step, an initial water content of the pulp slurry layer may be about 25-50 %, preferably about 30-35 % by weight, and a final water content may be less than about 5 % by weight, preferably less than about 1 % by weight.

It is noted that the vacuum sources provided must be dimensioned so as to provide a flow that is sufficient to evacuate the amount of steam generated during the heating/pressing steps, and also to accommodate the liquid water that is drawn out by the vacuum applied to the respective pair of press tools.

## Claims

1. A device for producing a 3D molded product from a pulp slurry, comprising:
a pair of cooperating press tools (30, 40), each having a respective product face,
the press tools being movable relative each other between a closed press position, wherein the product faces are sufficiently close to press the pulp product there between, and an open transfer position, wherein the pulp product can be removed from the product face of one of the press tools (30, 40),
wherein at least one of the product faces is porous, and
wherein the device further comprises a radiation heater (50, 60), which is adapted to radiate heat from a front side of the porous press tool towards the product face of the porous press tool (40), when the porous press tool (40) is in its open position, the front side being the product face side of the tool.

2. The device according to claim 1, wherein the radiation heater is movable between a heating position and a passive position, wherein the movable radiation heater (50) is adapted to be in the heating position when the press tools (30, 40) are in their open position, and adapted to be in the passive position when the press tools (30, 40) are in their closed position.

3. The device according to claim 2, wherein the movable radiation heater (50), in its heating position, is configured to be inserted at a preset distance from the product face of the porous press tool (40).

4. The device according to claim 1, wherein the radiation heater is external (60) such that the radiation heater is arranged externally in relation to the pair of cooperating press tools as seen when arranged in their respective tool holders.

5. The device according to claim 4, further comprising a tool transport member (80), adapted to move the porous press tool (40) to the external radiation heater (60) for heating of the product face of the porous press tool (40).

6. The device according to any one of the preceding claims, comprising at least two porous press tools (40a, 40b).

7. The device according to claim 6, wherein the device further comprises a changing device (70), adapted to, in-between two subsequent pressing operations of the pair of press tools (30, 40), change between the at least two porous press tools (40a, 40b), such that one of the at least two porous press tool is used in a first pressing operation and another one is used in a second, subsequent pressing operation.

8. The device according to claim 7, wherein the changing device further is adapted to move one porous press tool from a tool holder (41) of the porous press tool to the external radiation heater (60), and move another heated porous press tool from the external radiation heater (60) to the tool holder (41).

9. A method of producing a 3D molded product from a pulp slurry comprising:
providing a first and a second pair of cooperating press tools, each press tool having a respective product face, wherein at least one of the product faces of each pair of tools is porous,
applying a pulp slurry layer to one of the product faces of the first pair of press tools,
in a first forming step, pressing the pulp slurry layer between the first pair of press tools, while heating the pulp slurry layer and drawing a vacuum through the product face of the porous press tool,
transferring the pulp slurry layer to a product face of the second pair of press tools,
in a second, subsequent, forming step, pressing the pulp slurry layer between the second pair of press tools, while heating the pulp slurry layer and drawing a vacuum through the product face of the porous press tool,
wherein the method further comprises:
heating the product face of at least one of the porous press tools by radiating heat from a radiation heater from a front side of the porous press tool towards the product face of the porous press tool, the front side being the product face side of the tool.

10. The method as claimed in claim 9, wherein the step of heating the product face of each porous press tool comprises inserting the radiation heater at a preset distance from the product face of the porous press tool, heating the product face by radiating heat from the radiation heater towards the product face, and withdrawing the radiation heater.

11. The method as claimed in claim 9, wherein the step of heating the product face of each porous press tool comprises moving the porous press tool from a tool holder of the porous press tool to the radiation heater, heating the product face by radiating heat from the radiation heater towards the product face, and moving the porous press tool from the radiation heater to the tool holder.

12. The method as claimed in any one of claims 9-11, further comprising providing at least two porous press tools for each pair of cooperating press tools.

13. The method as claimed in claim 12, wherein, in-between two subsequent pressing operations of each pair of press tools, a change is performed between the at least two porous press tools, such that one of the at least two porous press tools is used in a first pressing operation and another one is used in a second, subsequent pressing operation.

14. The method as claimed in claim 12 or 13, wherein one of the at least two porous press tools for each pair of cooperating press tools is heated simultaneously as another one is used for pressing in the corresponding forming step.

15. The method as claimed in any one of claims 9-14, wherein each pair of cooperating press tools comprises one press tool presenting a porous product face and one press tool presenting a less porous product face, preferably a non-porous product face, wherein the product face of the less porous press tool is heated to a higher temperature than the porous press tool.

## Patentansprüche

1. Vorrichtung zum Herstellen eines geformten 3D-Produkts aus einer Zellstoffschlämme, Folgendes umfassend:
ein Paar zusammenwirkender Presswerkzeuge (30, 40), welche jeweils eine jeweilige Produktfläche aufweisen,
wobei die Presswerkzeuge relativ zueinander zwischen einer geschlossenen Pressposition, wobei die Produktflächen ausreichend nahe sind, um das Zellstoffprodukt dazwischen zu pressen, und einer offenen Transferposition beweglich sind, wobei das Zellstoffprodukt von der Produktfläche eines der Presswerkzeuge (30, 40) entfernt werden kann,
wobei mindestens eine der Produktflächen porig ist, und
wobei die Vorrichtung weiterhin eine Strahlungsheizung (50, 60) umfasst, welche eingerichtet ist, um Wärme von einer Vorderseite des porigen Presswerkzeugs in Richtung der Produktfläche des porigen Presswerkzeugs (40) abzustrahlen, wenn das porige Presswerkzeug (40) in seiner offenen Position ist, wobei die Vorderseite die Produktflächenseite des Werkzeugs ist.

2. Vorrichtung nach Anspruch 1, wobei die Strahlungsheizung zwischen einer Heizposition und einer passiven Position beweglich ist, wobei die bewegliche Strahlungsheizung (50) eingerichtet ist, um in der Heizposition zu sein, wenn die Presswerkzeuge (30, 40) in ihrer offenen Position sind, und eingerichtet ist, um in der passiven Position zu sein, wenn die Presswerkzeuge (30, 40) in ihrer geschlossenen Position sind.

3. Vorrichtung nach Anspruch 2, wobei die bewegliche Strahlungsheizung (50) in ihrer Heizposition eingerichtet ist, um in einem voreingestellten Abstand von der Produktfläche des porigen Presswerkzeugs (40) eingesetzt zu werden.

4. Vorrichtung nach Anspruch 1, wobei die Strahlungsheizung extern (60) ist, so dass die Strahlungsheizung in Bezug auf das Paar zusammenwirkender Presswerkzeuge extern angeordnet ist, wie sichtbar, wenn sie in ihren jeweiligen Werkzeughaltern angeordnet ist.

5. Vorrichtung nach Anspruch 4, weiterhin ein Werkzeugtransportelement (80) umfassend, welches eingerichtet ist, um das porige Presswerkzeug (40) zum Erwärmen der Produktfläche des porigen Presswerkzeugs (40) zu der externen Strahlungsheizung (60) zu bewegen.

6. Vorrichtung nach einem der vorhergehenden Ansprüche, mindestens zwei porige Presswerkzeuge (40a, 40b) umfassend.

7. Vorrichtung nach Anspruch 6, wobei die Vorrichtung weiterhin eine Wechselvorrichtung (70) umfasst, welche eingerichtet ist, um zwischen zwei aufeinanderfolgenden Pressvorgängen des Paars Presswerkzeuge (30, 40) zwischen den mindestens zwei porigen Presswerkzeugen (40a, 40b) zu wechseln, so dass eines der mindestens zwei porigen Presswerkzeuge in einem ersten Pressvorgang verwendet wird und ein anderes in einem zweiten nachfolgenden Pressvorgang verwendet wird.

8. Vorrichtung nach Anspruch 7, wobei die Wechselvorrichtung weiterhin eingerichtet ist, um ein poriges Presswerkzeug aus einem Werkzeughalter (41) des porigen Presswerkzeugs zu der externen Strahlungsheizung (60) zu bewegen und ein anderes erwärmtes poriges Presswerkzeug von der externen Strahlungsheizung (60) zu dem Werkzeughalter (41) zu bewegen.

9. Verfahren zum Herstellen eines geformten 3D-Produkts aus einer Zellstoffschlämme, Folgendes umfassend:
Bereitstellen eines ersten und eines zweiten Paars zusammenwirkender Presswerkzeuge, wobei jedes Presswerkzeug eine jeweilige Produktfläche aufweist, wobei mindestens eine der Produktflächen jedes Paars Werkzeuge porig ist,
Aufbringen einer Schicht Zellstoffschlämme auf eine der Produktflächen des ersten Paares Presswerkzeuge,
in einem ersten Ausbildungsschritt Pressen der Schicht Zellstoffschlämme zwischen dem ersten Paar Presswerkzeuge, während die Schicht Zellstoffschlämme erwärmt wird und ein Vakuum durch die Produktfläche des porigen Presswerkzeugs gezogen wird,
Transferieren der Schicht Zellstoffschlämme auf eine Produktfläche des zweiten Paares Presswerkzeuge,
in einem zweiten nachfolgenden Ausbildungsschritt Pressen der Schicht Zellstoffschlämme zwischen dem ersten Paar Presswerkzeuge, während die Schicht Zellstoffschlämme erwärmt wird und ein Vakuum durch die Produktfläche des porigen Presswerkzeugs gezogen wird,
wobei das Verfahren weiterhin Folgendes umfasst:
Erwärmen der Produktfläche mindestens eines der porigen Presswerkzeuge durch Abstrahlen von Wärme von einer Strahlungsheizung von einer Vorderseite des porigen Presswerkzeugs in Richtung der Produktfläche des porigen Presswerkzeugs, wobei die Vorderseite die Produktflächenseite des Werkzeugs ist.

10. Verfahren nach Anspruch 9, wobei der Schritt des Erwärmens der Produktfläche jedes porigen Presswerkzeugs Einsetzen der Strahlungsheizung in einem voreingestellten Abstand von der Produktfläche des porigen Presswerkzeugs, Erwärmen der Produktfläche durch Abstrahlen von Wärme von der Strahlungsheizung in Richtung der Produktfläche und Zurückziehen der Strahlungsheizung umfasst.

11. Verfahren nach Anspruch 9, wobei der Schritt des Erwärmens der Produktfläche jedes porigen Presswerkzeugs Bewegen des porigen Presswerkzeugs von einem Werkzeughalter des porigen Presswerkzeugs zu der Strahlungsheizung, Erwärmen der Produktfläche durch Abstrahlen von Wärme von der Strahlungsheizung in Richtung der Produktfläche und Bewegen des porigen Presswerkzeugs von der Strahlungsheizung zum Werkzeughalter umfasst.

12. Verfahren nach einem der Ansprüche 9 bis 11, weiterhin umfassend Bereitstellen von mindestens zwei porigen Presswerkzeugen für jedes Paar zusammenwirkender Presswerkzeuge.

13. Verfahren nach Anspruch 12, wobei zwischen zwei aufeinanderfolgenden Pressvorgängen jedes Paars Presswerkzeuge ein Wechsel zwischen den mindestens zwei porigen Presswerkzeugen durchgeführt wird, so dass eines der mindestens zwei porigen Presswerkzeuge in einem ersten Pressvorgang verwendet wird und ein anderes in einem zweiten nachfolgenden Pressvorgang verwendet wird.

14. Verfahren nach Anspruch 12 oder 13, wobei eines der mindestens zwei porigen Presswerkzeuge für jedes Paar zusammenwirkender Presswerkzeuge gleichzeitig erwärmt wird, wenn ein anderes zum Pressen in dem entsprechenden Ausbildungsschritt verwendet wird.

15. Verfahren nach einem der Ansprüche 9 bis 14, wobei jedes Paar zusammenwirkender Presswerkzeuge ein Presswerkzeug, welches eine porige Produktfläche aufweist, und ein Presswerkzeug umfasst, welches eine weniger porige Produktfläche, vorzugsweise eine nicht porige Produktfläche, aufweist, wobei die Produktfläche des weniger porigen Presswerkzeugs auf eine höhere Temperatur als das porige Presswerkzeug erwärmt wird.

## Revendications

1. Dispositif de production d'un produit moulé 3D à partir de pâte pulpaire, comprenant :
une paire d'outils de pressage coopérants (30,40), comportant chacun une face de produit respective,
les outils de pressage étant mobiles l'un rapport à l'autre en position de pressage fermée, dans laquelle les faces de produit sont suffisamment proches pour presser le produit pulpaire entre elles à cet endroit, et une position de transfert ouverte, dans laquelle le produit pulpaire peut être retiré de la face de produit d'un des outils de pressage (30, 40),
dans lequel au moins une des faces de produit est poreuse, et
dans lequel le dispositif comprend en outre un radiateur à rayonnement (50,60), qui est adapté pour irradier de la chaleur à partir d'un côté avant de l'outil de pressage poreux vers la face de produit de l'outil de pressage poreux (40) lorsque l'outil de pressage poreux (40) est dans sa position ouverte, le côté avant étant le côté de face de produit de l'outil.

2. Dispositif selon la revendication 1, dans lequel le radiateur à rayonnement est mobile entre une position de chauffage et une position passive, dans lequel le radiateur à rayonnement mobile (50) est adapté pour être dans la position de chauffage lorsque les outils de pressage (30,40) sont dans leur position ouverte et adapté pour être dans la position passive lorsque les outils de pressage (30,40) sont dans leur position fermée.

3. Dispositif selon la revendication 2, dans lequel le radiateur à rayonnement mobile (50), dans sa position de chauffage, est configuré pour être inséré à une distance préréglée de la face de produit de l'outil de pressage poreux (40).

4. Dispositif selon la revendication 1, dans lequel le radiateur à rayonnement est externe (60) de sorte que le radiateur à rayonnement soit disposé à l'extérieur par rapport à la paire d'outils de pressage coopérants comme vus lorsqu'ils sont disposés dans leurs supports d'outils respectifs.

5. Dispositif selon la revendication 4, comprenant en outre un élément de transport d'outil (80), adapté pour déplacer l'outil de pressage poreux (40) vers le radiateur à rayonnement externe (60) pour chauffer la face de produit de l'outil de pressage poreux (40).

6. Dispositif selon une quelconque des revendications précédentes, comprenant au moins deux outils de pressage poreux (40a, 40b).

7. Dispositif selon la revendication 6, dans lequel le dispositif comprend en outre un dispositif de permutation (70), adapté pour, entre deux opérations de pressage successives de la paire d'outils de pressage (30,40), permuter entre les au moins deux outils de pressage poreux (40a,40b), de sorte que un des au moins deux outils de pressage poreux soit utilisé dans une première opération de pressage et un autre soit utilisé dans une deuxième opération de pressage successive.

8. Dispositif selon la revendication 7, dans lequel le dispositif de permutation est en outre adapté pour déplacer un outil de pressage poreux d'un support d'outil (41) de l'outil de pressage poreux vers le radiateur à rayonnement externe (60) et déplacer un autre outil de pressage poreux chauffé du radiateur à rayonnement externe (60) vers le support d'outil (41).

9. Procédé de production d'un produit moulé 3D à partir de pâte pulpaire comprenant :
la fourniture d'une première et d'une deuxième paire d'outils de pressage coopérant, chaque outil de pressage comportant une face de produit respective, dans lequel au moins une des faces de produit de chaque paire d'outils est poreuse,
l'application d'une couche de pâte pulpaire sur une des faces de produit de la première paire d'outils de pressage,
dans une première étape de formation, le pressage de la couche de pâte pulpaire entre la première paire d'outils de pressage, tout en chauffant la couche de pâte pulpaire et en créant un vide à travers la face de produit de l'outil de pressage poreux,
le transfert de la couche de pâte pulpaire vers une face de produit de la deuxième paire d'outils de pressage,
dans une deuxième étape de formation successive, le pressage de la couche de pâte pulpaire entre la deuxième paire d'outils de pressage, tout en chauffant la couche de pâte pulpaire et en créant un vide à travers la face de produit de l'outil de pressage poreux,
dans lequel le procédé comprend en outre :
le chauffage de la face de produit d'au moins un des outils de pressage poreux en irradiant de la chaleur à partir d'un radiateur à rayonnement depuis un côté avant de l'outil de pressage poreux vers la face de produit de l'outil de pressage poreux, le côté avant étant le côté de face de produit de l'outil.

10. Procédé selon la revendication 9, dans lequel l'étape de chauffage de la face de produit de chaque outil de pressage poreux comprend l'insertion du radiateur à rayonnement à une distance préréglée de la face de produit de l'outil de pressage poreux, le chauffage de la face de produit en irradiant de la chaleur à partir du radiateur à rayonnement vers la face de produit et le retrait du radiateur à rayonnement.

11. Procédé selon la revendication 9, dans lequel l'étape de chauffage de la face de produit de chaque outil de pressage poreux comprend le déplacement de l'outil de pressage poreux d'un support d'outil de l'outil de pressage poreux vers le radiateur à rayonnement, le chauffage de la face de produit en irradiant de la chaleur du radiateur à rayonnement vers la face de produit et le déplacement de l'outil de pressage poreux du radiateur à rayonnement vers le support d'outil.

12. Procédé selon une quelconque des revendications 9 à 11, comprenant en outre la fourniture d'au moins deux outils de pressage poreux pour chaque paire d'outils de pressage coopérants.

13. Procédé selon la revendication 12, dans lequel, entre deux opérations de pressage successives de chaque paire d'outils de pressage, une permutation est effectuée entre les au moins deux outils de pressage poreux, de sorte que un des au moins deux outils de pressage poreux soit utilisé dans une première opération de pressage et un autre soit utilisé dans une deuxième opération de pressage successive.

14. Procédé selon la revendication 12 ou 13, dans lequel un des au moins deux outils de pressage poreux pour chaque paire d'outils de pressage coopérant est chauffé simultanément lorsque un autre est utilisé pour le pressage dans l'étape de formation correspondante.

15. Procédé selon une quelconque des revendications 9 à 14, dans lequel chaque paire d'outils de pressage coopérants comprend un outil de pressage présentant une face de produit poreuse et un outil de pressage présentant une face de produit moins poreuse, de préférence une face de produit non poreuse, dans lequel la face de produit de l'outil de pressage moins poreux est chauffée à une température plus élevée que l'outil de pressage poreux.
